# FASCICULE DE BREVET EUROPEEN

(11) **EP 1 199 112 B1**
(45) Date de publication et mention de la délivrance du brevet: **17.11.2004**
(21) Numéro de dépôt: 00440265.7
(22) Date de dépôt: 04.10.2000
(51) Int. Cl.: B08B 3/02, G02B 6/25

(54) **Appareil portable pour le nettoyage de fibres ou de filaments**
Tragbares Reinigungsgerät für Fasern oder Fäden
Portable apparatus for cleaning fibres or filaments

(43) Date de publication de la demande: 24.04.2002
(73) Titulaire: ELECTRICITE DE STRASBOURG (SOCIETE ANONYME), 67000 Strasbourg (FR)
(72) Inventeur: Pous, Yves, 67100 Strasbourg (FR)
(74) Mandataire: Nuss, Pierre

(56) Documents cités:
- FR-A- 2 773 089
- US-A- 4 591 390
- US-A- 5 922 141

## Description

La présente invention concerne le domaine du nettoyage, et accessoirement du démêlage, de produits allongés de très faible section regroupés en faisceaux tels que notamment les fibres optiques, plus particulièrement après enlèvement de leur tube de protection (opération désignée par le terme détubage), et a pour objet un appareil de nettoyage de filaments ou de fibres, ou de portions de plus ou moins grande longueur de tels filaments ou de telles fibres.

Un câble à fibres optiques se compose, de par sa fabrication, d'une gaine de protection mécanique et d'étanchéité qui peut être réalisée en un matériau plastique, métallique ou autre.

A l'intérieur de cette protection mécanique se trouvent un ou des tubes contenant des fibres optiques baignant dans du gel ou de la graisse et un brin ou jonc central autour duquel sont disposés lesdits tubes.

Pour exploiter ces câbles à fibres optiques, et notamment assurer leur connexion ou interconnexion, il faut ôter la gaine de protection mécanique, couper le brin ou jonc central, puis détuber les fibres sur une certaine longueur (généralement plusieurs mètres) et les nettoyer.

Le nettoyage de ces fibres se fait, encore actuellement, généralement de manière manuelle avec un chiffon ou un papier imbibé d'alcool ou d'un autre solvant, au moyen duquel l'opérateur nettoie lesdites fibres, une à une, sur toute la longueur détubée, pour enlever le gel ou la graisse dont elles sont couvertes et permettre leur séparation et leur individualisation, nécessaires à leur mise en oeuvre.

Ce nettoyage pratiquement obligatoire pour pouvoir utiliser ces fibres dans les règles de l'art, entraîne les problèmes suivants :
- compte tenu du nombre de fibres par tube, du nombre de tubes par câble et de la longueur à détuber, le mode de nettoyage actuel est, d'une part, très long et très fastidieux à effectuer et, d'autre part, périlleux et très délicat à réaliser du fait des nombreuses manipulations risquant de provoquer la casse des fibres qui sont d'une très grande fragilité ;
- si l'une des fibres casse, l'opération de dégainage, détubage, nettoyage, etc... est à recommencer totalement pour toutes les fibres du câble considéré, entraînant un surcoût horaire et matériel important ;
- ce surcoût précité peut être encore fortement augmenté lorsque le câble, déjà posé ou enterré, est trop court pour recommencer l'opération de dégainage, détubage, nettoyage etc..., et doit être entièrement remplacé sur plusieurs centaines de mètres, voire quelques kilomètres ;
- si pendant l'opération de nettoyage manuel, des impuretés abrasives (sable, copeaux de perçage, etc...) adhèrent accidentellement au chiffon, on risque très fortement, en frottant les fibres, d'endommager la gaine de protection qui les entoure individuellement et, par la suite, de provoquer la casse lors du lovage dans les cassettes, ce à court ou à long terme, ce qui est très gênant vu la quantité d'informations en transit sur chaque fibre.

Par le document US-A-5 056 185, on connaît un appareil fixe de nettoyage d'une fibre optique passant dans ledit appareil pendant son transfert entre une bobine initiale, de laquelle elle est déroulée, et une bobine finale, sur laquelle elle est rembobinée.

Cet appareil connu est principalement composé, d'une part, d'un réceptacle étanche pour un liquide de nettoyage, traversé progressivement, suivant un trajet de traitement prédéfini, par le ou les filaments ou fibres à nettoyer, et, d'autre part, d'un gicleur de liquide de nettoyage à jet perpendiculaire à la direction longitudinale des filaments ou fibres.

Toutefois, cet appareil n'est destiné qu'au nettoyage d'éléments allongés unitaires et sur poste fixe, ledit appareil n'étant pas transportable sur différents sites d'intervention distants, tels que des chantiers.

En vue de tenter de pallier les inconviénients précités, il a été proposé par le document EP-A-1 044 076, un appareil portable pour pour le nettoyage de fibres ou de filaments, notamment de fibres optiques en faisceau(x) après leur détubage, selon le préambule de la revendication 1.

Cet appareil connu comporte des moyens de guidage comprenant au moins un peigne ou un guide séparateur au niveau de l'entrée du trajet de traitement; de plus la partie supérieure est munie d'au moins une poignée de préhension pour le déplacement dudit appareil de nettoyage lors de son transport et/ou de sa mise en oeuvre, ledit appareil étant ainsi adapté pour une utilisation sur chantier.

La mise en contact du liquide de nettoyage avec les filaments ou fibres se fait soit par des brosses ou des rouleaux éponges, soit par des rampes de projection radiale, à jets perpendiculaires à la direction longitudinale des fibres ou filaments, ces dernièr(e)s circulant dans un conduit perforé.

Toutefois, la première variante précitée aboutit à un contact mécanique et relativement bref entre les filaments ou fibres et les organes de nettoyage mobiles, d'où il peut résulter des taux de cassure ou de détérioration encore relativement élevés ou éventuellement un nettoyage insuffisant, en particulier lorsque l'opérateur est pressé.

La seconde variante nécessite de trouver un compromis difficile entre des jets puissants assurant un bon nettoyage des filaments ou fibres, mais pouvant du fait de leur direction d'impact latérale, provoquer des détériorations, voire des cassures, et un conduit plus ou moins ajouré pour modérer la puissance d'impact des jets, mais limitant simultanément l'action nettoyante.

La présente invention a pour but de surmonter ces limitations, et de proposer un appareil portable de nettoyage du type précité réalisant un nettoyage plus efficace, mais également plus délicat pour les objets à nettoyer.

A cet effet, la présente invention a pour objet un appareil portable pour le nettoyage de fibres ou de filaments, notamment de fibres optiques en faisceau(x) après leur détubage, essentiellement composé, d'une part, d'un contenant comprenant une partie inférieure formant ou comprenant un réceptacle étanche pour un liquide de nettoyage et une partie supérieure formant couvercle mobile destiné à fermer ledit contenant, ledit contenant comprenant un trajet de traitement prédéfini pour les filaments ou fibres à nettoyer et, d'autre part, de moyens de mise en contact du liquide de nettoyage avec lesdit(e)s filaments ou fibres pour générer une action nettoyante, appareil caractérisé en ce que le trajet de traitement est essentiellement situé dans un canal de nettoyage destiné à recevoir les filaments ou fibres à nettoyer ou au moins une portion de ces dernier(e)s et s'étendant sensiblement entre deux ouvertures opposées ménagées dans la paroi du contenant pour le passage des filaments ou fibres, et en ce que les moyens de mise en contact comprennent, d'une part, un gicleur ou un moyen d'éjection analogue de liquide de nettoyage alimenté par une pompe ou similaire, monté au niveau de l'une des extrémités du canal de nettoyage et dont le jet est dirigé vers l'extrémité opposée de ce dernier et, d'autre part, un ou plusieurs éléments de support et/ou de positionnement forcé des filaments ou fibres formés ou disposés dans ledit canal, en étant espacés entre eux.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 une vue en élévation latérale et partiellement en transparence d'un appareil de nettoyage selon l'invention ;
la figure 2 est une vue en élévation latérale et en coupe longitudinale de la structure profilée formant le canal de nettoyage faisant partie de l'appareil selon l'invention représenté sur la figure 1 ;
la figure 3 est une vue de dessus de la structure représentée sur la figure 2 ;
la figure 4 est une vue partielle à une échelle différente du détail A de la figure 3, et,
la figure 5 est une vue selon la direction B de l'objet représenté sur la figure 4.

Comme le montrent les figures des dessins annexés, l'appareil portable 1 pour le nettoyage de fibres ou de filaments 6, notamment de fibres optiques en faisceau(x) après leur détubage, est essentiellement composé, d'une part, d'un contenant comprenant une partie inférieure 2 formant ou comprenant un réceptacle étanche 3 pour un liquide de nettoyage 3' et une partie supérieure 4 formant couvercle mobile (pivotement autour d'une charnière latérale par exemple) destiné à fermer ledit contenant, ce dernier comprenant un trajet de traitement prédéfini pour les filaments ou fibres 6 à nettoyer et, d'autre part, par des moyens 7 ; 8,8' de mise en contact du liquide de nettoyage 3' avec lesdit(e)s filaments ou fibres 6 pour générer une action nettoyante.

Conformément à l'invention, le trajet de traitement est essentiellement situé dans un canal de nettoyage 5 destiné à recevoir les filaments ou fibres 6 à nettoyer ou au moins une portion de ces dernier(e)s et s'étendant sensiblement entre deux ouvertures opposées 9, 9' ménagées dans la paroi du contenant, pour le passage des filaments ou fibres 6, et en ce que les moyens de mise en contact comprennent, d'une part, un gicleur ou un moyen d'éjection analogue 7 de liquide de nettoyage 3' alimenté par une pompe ou similaire, monté au niveau de l'une des extrémités du canal de nettoyage 5 et dont le jet 7' est dirigé vers l'extrémité opposée de ce dernier et, d'autre part, un ou plusieurs éléments de support, de passage et/ou de positionnement forcés 8, 8' des filaments ou fibres 6, formés ou disposés dans ledit canal 5, en étant espacés entre eux.

Le nettoyage s'effectue par conséquent sans contact mécanique et avec un flux de liquide de nettoyage 3' dirigé sensiblement dans la direction longitudinale des fibres ou filaments 6, donc sans impact latéral perpendiculaire et avec une action nettoyante plutôt tangentielle, dont l'intensité est maximale à proximité de la sortie des filaments ou fibres 6 de l'appareil 1 (la pression d'éjection du gicleur 7 est par exemple comprise entre 1 et 10 bars, ce en fonction notamment de la nature des fibres ou filaments à nettoyer et de leur degré de salissure).

En effet, la mise en oeuvre de l'appareil de nettoyage 1 consiste à mettre en place les filaments ou fibres 6 à nettoyer dans le canal 5 et ensuite à déplacer l'appareil 1 dans la direction du jet 7' de liquide de nettoyage 3' (solution préférentielle) ou à déplacer le faisceau de fibres ou de filaments 6 en les tractant dans la direction opposée à celle dudit jet 7', l'ouverture 9 proximale du gicleur 7 étant positionnée, en début de phase de nettoyage, à proximité de l'interface entre les portions de fibres ou de filaments 6 détubées et l'extrémité du câble non affectée par le détubage.

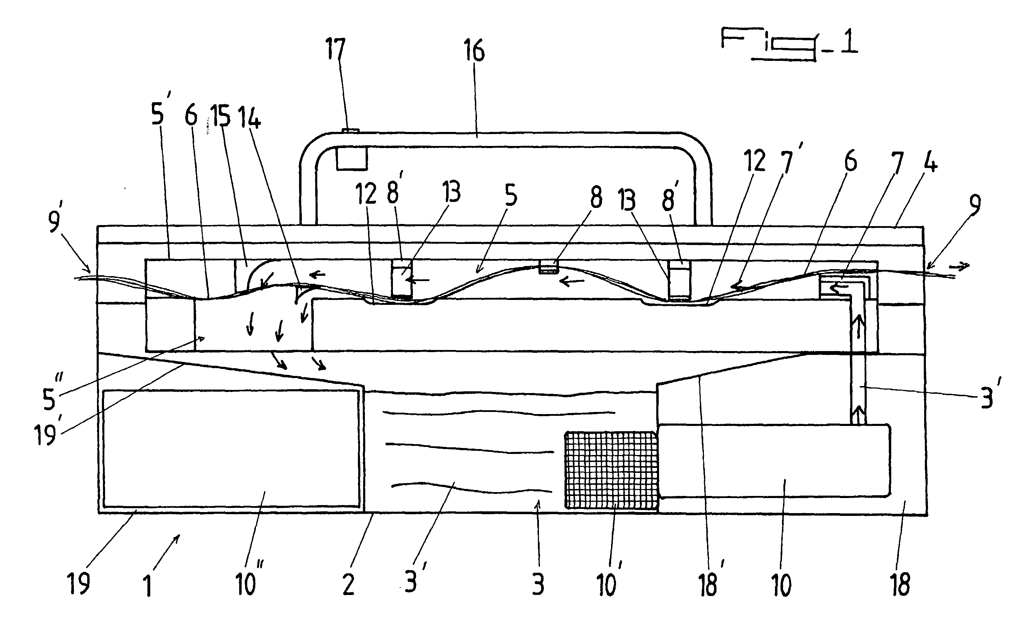

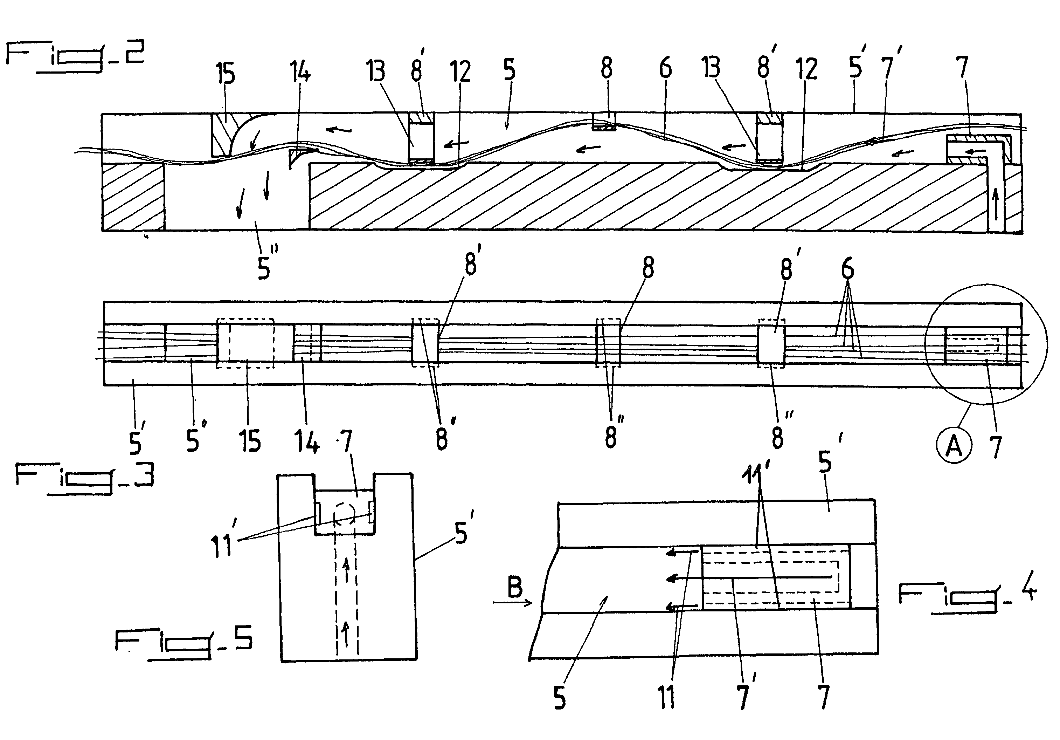

Selon un mode de réalisation préféré de l'invention, représentée notamment aux figures 2 à 5 des dessins annexés, le canal de nettoyage 5 est formé par une structure profilée 5' présentant sensiblement une section en U, dont la face supérieure ouverte est fermée, préférentiellement de manière étanche, lors du rabattement du couvercle 4 et qui est pourvue, à proximité de son extrémité opposée à l'extrémité recevant le gicleur 7, d'une ouverture 5" d'évacuation du liquide de nettoyage 3' vers le réceptacle étanche 3 formant réservoir, situé dans le bas du contenant.

Une telle réalisation du canal 5 autorise une mise en place rapide des fibres ou filaments 6 par simple dépôt dans ledit canal 5 lorsque le contenant est ouvert, et une bonne canalisation du flux de liquide de nettoyage 3', avec une limitation des déperditions. En vue de rendre le nettoyage plus efficace encore, par fourniture d'une action de nettoyage pseudo-mécanique par turbulence, il peut être prévu qu'au moins un jet d'air 11 soit associé et mélangé au jet 7' de liquide de nettoyage 3', ledit jet d'air 11 étant préférentiellement obtenu par aspiration ou effet Venturi au niveau du gicleur 7 de liquide de nettoyage 3'.

Comme le montrent les figures 4 et 5 des dessins annexés, l'air pourra être avantageusement injecté dans le jet 7' émis par le gicleur 7 en prévoyant des canaux 11' d'aspiration et d'injection d'air de part et d'autre dudit gicleur 7.

Les éléments 8, 8' de support et/ou de positionnement assurent, lors d'un déplacement relatif de l'appareil 1 par rapport aux fibres ou filaments 6, que ces derniers suivent, par la création de points de passage forcé non alignés et espacés longitudinalement dans le canal 5, un parcours de nettoyage non rectiligne dans le flux perturbé de liquide de nettoyage 3' (à contresens par rapport à ce dernier), chaque portion desdit(e)s fibres ou filaments 6 étant alternativement situées à des hauteurs différentes dans ledit canal (Figures 1 et 2 ).

Préférentiellement, les éléments de support et/ou de positionnement forcé 8, 8' définissent alternativement des positions de passage hautes et basses pour les filaments ou fibres 6 traversant le canal de nettoyage 5.

Selon une variante de réalisation de l'invention, les éléments 8, 8' de support et/ou de positionnement forcé, avec jeu et sans pincement, des fibres ou filaments 6 consistent en des taquets s'étendant transversalement à travers le canal de nettoyage 5, préférentiellement montés dans des rainures 8" ménagées dans les parois de la structure 5' délimitant le canal de nettoyage 5 et maintenant les filaments ou fibres 6 à des hauteurs différentes dans ledit canal 5, par des actions de support et/ou de poussée.

Pour faciliter la mise en place des fibres ou filaments 6 à nettoyer en début de l'opération de traitement, les taquets 8' déterminant une position basse des filaments ou fibres 6, sont montés de manière amovible dans leurs rainures 8" (leur blocage en position peuvent éventuellement être assuré par le couvercle 4 lors de son rabattement), coopèrent chacun avec un renfoncement 12 correspondant ménagé dans le fond du canal de nettoyage 5 et comportent un ajour ou une partie dégagée 13 pour le passage de l'excédent de liquide de nettoyage 3' ne pouvant passer sous ledit ou lesdits taquets 8'.

Les éléments 8 définissant les positions hautes pouvant, le cas échéant, être directement formés dans le canal 5 de la structure profilée lors de sa fabrication.

On notera que le trajet sinueux suivi par les fibres ou filaments 6 et leur passage obligé sous ou sur les taquets 8, 8' assure non seulement une exposition de la totalité des surfaces extérieures de tou(te)s les fibres ou filaments 6 au flux sous pression du mélange liquide / air, mais également un démêlage de ces dernier(e)s.

Pour limiter au maximum tout épanchement de liquide de nettoyage 3', tout en évitant l'utilisation des moyens d'étanchéité susceptible de pincer, de retenir ou de détériorer d'une manière quelconque les fibres ou filaments au cours de leurs défilement dans l'appareil 1, la structure profilée 5' comporte, au niveau de son ouverture d'évacuation 5", dans la direction d'écoulement du liquide de nettoyage 3', un premier déflecteur inférieur 14 et un second déflecteur supérieur 15 sous forme de coins à pentes incurvées, décalés longitudinalement entre eux, obstruant ensemble la totalité du passage du canal 5 et destinés à diriger le flux de liquide de nettoyage 3' vers ladite ouverture 5", les fibres ou filaments 6 à nettoyer s'étendant sur le déflecteur inférieur 14 et sous le déflecteur supérieur 15.

Préférentiellement, l'extrémité supérieure du déflecteur supérieur 14 sera située plus haut que l'extrémité inférieure du déflecteur supérieur 15, avec leurs arêtes de coins dirigées dans le sens contraire du flux, le déflecteur supérieur 15 au moins étant monté de manière amovible (par exemple dans des rainures opposées du profilé 5').

En outre, les parties des taquets ou étriers 8, 8' et des déflecteurs 14, 15 en contact avec les fibres ou filaments 6 comporteront avantageusement des arêtes arrondies (taquet 8 en forme de U par exemple).

Pour obtenir un appareil 1 compact, équilibré en poids et autonome, le contenant peut comprendre dans sa partie inférieure 2 deux compartiments étanches séparés 18 et 19, l'un renfermant la pompe 10 raccordée à une crépine d'aspiration muni d'un filtre 10' s'étendant dans le réservoir 3 à liquide de nettoyage 3' et l'autre l'alimentation autonome 10" de ladite pompe 10, ledit réservoir 3 étant formé par le volume situé entre les deux compartiments séparés 18 et 19, ces derniers comportant des parois supérieures 18', 19' inclinées depuis les parois latérales de la partie inférieure 2 du contenant en direction dudit réservoir 3 (voir figure 1).

On notera que la constitution précitée de l'appareil 1 permet à ce dernier de fonctionner avec une faible quantité de liquide de nettoyage, du fait du filtrage et de la recirculation de ce dernier et des faibles pertes au cours des opérations de nettoyage. Le réservoir 3 pourra être pourvu d'un orifice ou d'un conduit de vidange obturable (non représenté).

Enfin, pour aboutir à un appareil 1 aisé à manipuler et à transporter et présentant un fonctionnement sécurisé, la partie supérieure 4 formant couvercle comporte une poignée de préhension ou analogue 16 et est pourvue d'un organe 17 de commande de fonctionnement de la pompe 10 alimentant le gicleur 7, associé à un dispositif de verrouillage à l'état enclenché et/ou à un mécanisme d'inhibition de fonctionnement à l'état ouvert ou non verrouillé en fermeture du contenant.

Le mécanisme d'inhibition peut par exemple consister en une tringlerie de commande relié à l'organe de commande 17 et séparée en deux portions indépendantes et non coopérantes lors de l'ouverture du couvercle 4 ou du déverrouillage de la fermeture du contenant.

En outre, l'appareil 1 pourra éventuellement être muni, au niveau de ses ouvertures 9, 9' d'entrée et de sortie des fibres ou filaments 6, de guides ou d'embout de guidage et d'introduction assurant un support et une introduction ou une extraction accompagnée, le cas échéant associé au niveau de la sortie à une soufflante de séchage et de démêlage supplémentaire (non représenté).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, tel que defini par les revendications.

## Revendications

1. Appareil portable pour le nettoyage de fibres ou de filaments, notamment de fibres optiques en faisceau(x) après leur détubage, essentiellement composé, d'une part, d'un contenant comprenant une partie inférieure (2) formant ou comprenant un réceptacle étanche (3) pour un liquide de nettoyage (3') et une partie supérieure (4) formant couvercle mobile destiné à fermer ledit contenant, ledit contenant comprenant un trajet de traitement prédéfini pour les filaments ou fibres (6) à nettoyer et, d'autre part, de moyens (7 ; 8,8') de mise en contact du liquide de nettoyage (3') avec lesdit(e)s filaments ou fibres (6) pour générer une action nettoyante, appareil **caractérisé en ce que** le trajet de traitement est essentiellement situé dans un canal de nettoyage (5) destiné à recevoir les filaments ou fibres (6) à nettoyer ou au moins une portion de ces dernier(e)s et s'étendant sensiblement entre deux ouvertures opposées (9, 9') ménagées dans la paroi du contenant pour le passage des filaments ou fibres (6), et **en ce que** les moyens de mise en contact comprennent, d'une part, un gicleur ou un moyen d'éjection analogue (7) de liquide de nettoyage (3') alimenté par une pompe ou similaire, monté au niveau de l'une des extrémités du canal de nettoyage (5) et dont le jet (7') est dirigé vers l'extrémité opposée de ce dernier et, d'autre part, un ou plusieurs éléments de support et/ou de positionnement forcé (8, 8') des filaments ou fibres (6), formés ou disposés dans ledit canal (5), en étant espacés entre eux.

2. Appareil selon la revendication 1, **caractérisé en ce que** le canal de nettoyage (5) est formé par une structure profilée (5') présentant sensiblement une section en U, dont la face supérieure ouverte est fermée, préférentiellement de manière étanche, lors du rabattement du couvercle (4) et qui est pourvue, à proximité de son extrémité opposée à l'extrémité recevant le gicleur (7), d'une ouverture (5") d'évacuation du liquide de nettoyage (3') vers le réceptacle étanche (3) formant réservoir, situé dans le bas du contenant.

3. Appareil selon l'une quelconque des revendications 1 et 2, **caractérisé en ce qu'**au moins un jet d'air (11) est associé et mélangé au jet (7') de liquide de nettoyage (3'), ledit jet d'air (11) étant préférentiellement obtenu par aspiration ou effet Venturi au niveau du gicleur (7) de liquide de nettoyage (3').

4. Appareil selon l'une quelconque des revendications 1 à 3, **caractérisé en ce que** les éléments (8, 8') de support et/ou de positionnement forcé, avec jeu et sans pincement, des fibres ou filaments (6) consistent en des taquets s'étendant transversalement à travers le canal de nettoyage (5), préférentiellement montés dans des rainures (8") ménagées dans les parois de la structure (5') délimitant le canal de nettoyage (5) et maintenant les filaments ou fibres (6) à des hauteurs différentes dans ledit canal (5), par des actions de support et/ou de poussée.

5. Appareil selon la revendication 4, **caractérisé en ce que** le ou les taquets (8') déterminant une position basse des filaments ou fibres (6), sont montés de manière amovible dans leurs rainures (8"), coopèrent chacun avec un renfoncement (12) correspondant ménagé dans le fond du canal de nettoyage (5) et comportent un ajour ou une partie dégagée (13) pour le passage de l'excédent de liquide de nettoyage (3') ne pouvant passer sous ledit ou lesdits taquets (8').

6. Appareil selon l'une quelconque des revendications 1 à 5, **caractérisé en ce que** les éléments de support et/ou de positionnement forcé (8, 8') définissent alternativement des positions de passage hautes et basses pour les filaments ou fibres (6) traversant le canal de nettoyage (5).

7. Appareil selon l'une quelconque des revendications 2 à 6, **caractérisé en ce que** la structure profilée (5') comporte, au niveau de son ouverture d'évacuation (5"), dans la direction d'écoulement du liquide de nettoyage (3'), un premier déflecteur inférieur (14) et un second déflecteur supérieur (15) sous forme de coins à pentes incurvées, décalés longitudinalement entre eux , obstruant ensemble la totalité du passage du canal (5) et destinés à diriger le flux de liquide de nettoyage (3') vers ladite ouverture (5"), les fibres ou filaments (6) à nettoyer s'étendant sur le déflecteur inférieur (14) et sous le déflecteur supérieur (15).

8. Appareil selon l'une quelconque des revendications 1 à 7, **caractérisé en ce que** la partie supérieure (4) formant couvercle comporte une poignée de préhension ou analogue (16) et est pourvue d'un organe (17) de commande de fonctionnement de la pompe (10) alimentant le gicleur (7), associé à un dispositif de verrouillage à l'état enclenché et/ou à un mécanisme d'inhibition de fonctionnement à l'état ouvert ou non verrouillé en fermeture du contenant.

9. Appareil selon l'une quelconque des revendications 2 à 8, **caractérisé en ce que** le contenant comprend deux compartiments étanches séparés (18 et 19), l'un renfermant la pompe (10) raccordée à une crépine d'aspiration muni d'un filtre (10') s'étendant dans le réservoir (3) à liquide de nettoyage (3') et l'autre l'alimentation autonome (10") de ladite pompe (10), ledit réservoir (3) étant formé par le volume situé entre les deux compartiments (18 et 19), ces derniers comportant des parois supérieures (18', 19') inclinées depuis les parois latérales du contenant (2) en direction dudit réservoir (3).

## Patentansprüche

1. Tragbares Reinigungsgerät für Fasern oder Filamente, insbesondere von optischen Fasern in Bündel(n) nach ihrer Formung, im Wesentlichen gebildet einerseits aus einem Behälter umfassend einen unteren Teil (2), der eine dichte Aufnahme (3) für eine Reinigungsflüssigkeit (3') bildet oder umfasst, und einen oberenTeil (4), der eine bewegliche Abdeckung bildet, die zum Verschließen des Behälters bestimmt ist, wobei dieser Behälter einen definierten Behandlungsweg für die zu reinigenden Filamente oder Fasern (6) umfasst, und andererseits aus Mitteln (7; 8, 8') zum in Kontakt bringen der Reinigungsflüssigkeit (3') mit den Filamenten oder Fasern (6), um eine Reinigungswirkung zu erzeugen, das Gerät ist **dadurch gekennzeichnet, dass** der Behandlungsweg im Wesentlichen in einem Reinigungskanal (5) gelegen ist, der zum Aufnehmen der zu reinigenden Filamente oder Fasern (6) bestimmt ist oder mindestens eines Teils derselben und sich im Wesentlichen zwischen zwei gegenüberliegenden Öffnungen (9, 9') erstreckt, die in der Behälterwand für den Durchtritt der Filamente oder Fasern (6) ausgebildet sind, und dadurch, dass die Mittel zum in Kontakt bringen einerseits eine Düse oder ein analoges Ausstoßmittel (7) für Reinigungsflüssigkeit (3') umfassen, die durch eine Pumpe oder ähnliches gespeist wird, angebracht auf Höhe eines der Enden des Reinigungskanals (5) und deren Strahl (7') zum gegenüberliegenden Ende davon gerichtet ist, und andererseits einem oder mehreren Trägerelementen und/oder Zwangspositionierelementen (8, 8') für Filamente oder Fasern (6), die im Kanal (5) ausgebildet oder angeordnet sind, wobei sie in einem Abstand zueinander sind.

2. Gerät nach Anspruch 1, **dadurch gekennzeichnet, dass** der Reinigungskanal (5) durch eine Profilstruktur (5') gebildet ist, die im Wesentlichen einen U-förmigen Querschnitt aufweist, deren offene Oberseite beim Herunterklappen der Abdeckung (4) bevorzugt dicht verschlossen ist, und die nahe ihrem Ende, das dem die Düse (7) aufnehmenden Ende gegenüberliegt, mit einer Öffnung (5") zum Ablassen von Reinigungsflüssigkeit (3') zur dichten Aufnahme (3) versehen ist, die ein unten im Behälter gelegenes Reservoir bildet.

3. Gerät nach einem der Ansprüche 1 und 2, **dadurch gekennzeichnet, dass** mindestens ein Luftstrahl (11) dem Strahl (7') der Reinigungsflüssigkeit (3') zugeordnet und zugemischt ist, wobei der Luftstrahl (11) bevorzugt durch Ansaugen oder Venturi-Effekt auf Höhe der Düse (7) der Reinigungsflüssigkeit (3') erhalten ist.

4. Gerät nach einem der Ansprüche 1 bis 3, **dadurch gekennzeichnet, dass** die Trägerelemente und/oder Zwangspositionierelemente (8, 8') mit Spiel und ohne Klemmen für Fasern oder Filamente (6) aus Vorsprüngen bestehen, die sich quer über den Reinigungskanal (5) erstrecken, bevorzugt in Rillen (8") angebracht, die in den Wänden der Struktur (5') ausgeführt sind, die den Reinigungskanal (5) begrenzen und die Filamente oder Fasern (6) durch Trägerwirkung und/oder Schubwirkung auf unterschiedlichen Höhen im Kanal (5) halten.

5. Gerät nach Anspruch 4, **dadurch gekennzeichnet, dass** der oder die Vorsprünge (8'), die eine untere Position der Filamente oder Fasern (6) bestimmen, beweglich in ihren Rillen (8") angebracht sind, jeweils mit einer entsprechenden Vertiefung (12) kooperieren, die am Boden des Reinigungskanals (5) ausgeführt ist, und einen Durchbruch oder einen freien Teil (13) für den Durchtritt von überschüssiger Reinigungsflüssigkeit (3') umfassen, die nicht unter den oder die Vorsprünge (8') laufen kann.

6. Gerät nach einem der Ansprüche 1 bis 5, **dadurch gekennzeichnet, dass** die Trägerelemente und/oder Zwangspositionierelemente (8, 8') alternativ obere und untere Durchtrittspositionen für die Filamente oder Fasern (6) definieren, die den Reinigungskanal (5) durchlaufen.

7. Gerät nach einem der Ansprüche 2 bis 6, **dadurch gekennzeichnet, dass** die Profilstruktur (5') auf Höhe ihrer Auslassöffnung (5") in der Fließrichtung der Reinigungsflüssigkeit (3') eine erste untere Führung (14) und eine zweite obere Führung (15) in Form von Ecken mit gewölbten Neigungen umfassen, die längs zueinander versetzt sind, die zusammen den gesamten Durchtritt des Kanals (5) versperren und dazu vorgesehen sind, den Reinigungsflüssigkeitsstrom (3') zur Öffnung (5") zu leiten, wobei die zu reinigenden Fasern oder Filamente (6) sich über der unteren Führung (14) und unter der oberen Führung (15) erstrecken.

8. Gerät nach einem der Ansprüche 1 bis 7, **dadurch gekennzeichnet, dass** der obere Teil (4), der eine Abdeckung bildet, einen Handgriff oder Analoges (16) umfasst und mit einem Organ (17) zur Steuerung der Funktion der Pumpe (10) versehen ist, die die Düse (7) speist, in Verbindung mit einer Verriegelungseinrichtung im eingerasteten Zustand und/oder einem Mechanismus zur Funktionssperre im geöffneten oder im nicht verriegelten Zustand bei geschlossenem Behälter.

9. Gerät nach einem der Ansprüche 2 bis 8, **dadurch gekennzeichnet, dass** der Behälter zwei getrennte dichte Abteile (18 und 19) umfasst, wobei eines die Pumpe (10) einschließt, die mit einem Ansaugsieb verbunden ist, das mit einem Filter (10') ausgerüstet ist, das sich im Reservoir (3) mit Reinigungsflüssigkeit (3') erstreckt, und das andere die autonome Versorgung (10") der Pumpe (10), wobei das Reservoir (3) durch das zwischen den beiden Abteilen (18 und 19) gelegene Volumen gebildet ist, wobei diese obere Wände (18', 19') umfassen, die von den Seitenwänden des Behälters (2) in Richtung des Reservoirs (3) geneigt sind.

## Claims

1. Portable apparatus for cleaning fibres or filaments, especially bundled optical fibres after taking them out of their tube, essentially composed, on the one hand, of a container comprising a lower part (2), forming or comprising a fluidtight receptacle (3) for a cleaning fluid (3'), and an upper part (4), forming a movable cover intended to close off the- said container, the said container comprising a predefined treatment path for the filaments or fibres (6) to be cleaned and, on the other hand, means (7; 8, 8') for bringing the cleaning fluid (3') into contact with the said filaments or fibres (6) in order to generate a cleaning action, which apparatus is **characterized in that** the treatment path is located essentially in a cleaning channel (5) intended to receive the filaments or fibres (6) to be cleaned, or at least a portion of these filaments or fibres, and extending approximately between two opposed openings (9, 9') that are provided in the wall of the container for passage of the filaments or fibres (6) and **in that** the contacting means comprise, on the one hand, a nozzle (7) or similar means for ejecting cleaning fluid (3') supplied by a pump or the like, which nozzle or similar means is mounted at one of the ends of the cleaning channel (5) and the jet (7') from which is directed towards the opposite end of the said channel and, on the other hand, one or more elements (8, 8') for supporting and/or forcibly positioning the filaments or fibres (6), the said elements being formed or placed in the said channel (5) and being spaced apart from one another.

2. Apparatus according to Claim 1, **characterized in that** the cleaning channel (5) is formed by a profiled structure (5') having approximately a U-shaped cross section, the open upper face of which is closed, preferably in a fluidtight manner, when putting the cover (4) thereon, and this profiled structure is provided, near its end on the opposite side from the end receiving the nozzle (7), with an opening (5") for discharging the cleaning fluid (3') into the fluidtight receptacle (3) forming a reservoir, this being located in the bottom of the container.

3. Apparatus according to either of Claims 1 and 2, **characterized in that** at least one jet of air (11) is combined and mixed with the jet (7') of cleaning fluid (3'), said jet of air (11) being preferably obtained by suction or Venturi effect at the nozzle (7) for the cleaning fluid (3').

4. Apparatus according to any one of Claims 1 to 3, **characterized in that** the elements (8, 8'), for supporting and/or forcibly positioning the fibres or filaments (6), with clearance but without pinching, consists of lugs extending transversely across the cleaning channel (5), preferably mounted in grooves (8") made in the walls of the structure (5') defining the cleaning channel (5) and maintaining the fibres or filaments (6) at different heights in the said channel (5) by support and/or thrust actions.

5. Apparatus according to Claim 4, **characterized in that** the lug or lugs (8') that determine a low position of the filaments or fibres (6) are removably mounted in their grooves (8"), each cooperate with a corresponding indentation (12) made in the bottom of the cleaning channel (5) and include an aperture or exposed part (13) for passage of the excess cleaning fluid (3') that cannot pass beneath the said lug or lugs (8').

6. Apparatus according to any one of Claims 1 to 5, **characterized in that** the support and/or forced positioning elements (8, 8') define, alternately, high and low passage positions for the filaments or fibres (6) passing through the cleaning channel (5).

7. Apparatus according to any one of Claims 2 to 6, **characterized in that** the profiled structure (5') has, near its discharge opening (5"), in the direction of flow of the cleaning fluid (3'), a lower first deflector (14) and an upper second deflector (15) in the form of wedges with curved slopes, these deflectors being longitudinally offset from each other, together obstructing the entire passage of the channel (5) and intended to direct the stream of cleaning fluid (3') towards the said opening (5"), the fibres or filaments (6) to be cleaned running over the lower deflector (14) and under the upper deflector (15).

8. Apparatus according to any one of Claims 1 to 7, **characterized in that** the lid-forming upper part (4) has a gripping handle (16) or the like and is provided with an actuator (17) for operating the pump (10) that feeds the nozzle (7), the said actuator being combined with a device for locking in the tripped state and/or with a mechanism for inhibiting the operation in the open or unlocked state on closing the container.

9. Apparatus according to any one of Claims 2 to 8, **characterized in that** the container comprises two separate fluidtight compartments (18 and 19), one housing the pump (10) connected to a suction pump strainer fitted with a filter (10') extending into the reservoir (3) of cleaning fluid (3') and the other housing the autonomous supply (10") for the said pump (10), the said reservoir (3) being formed by the volume located between the two compartments (18 and 19), the latter having upper walls (18', 19') that are inclined downwards from the side walls of the container (2) towards the said reservoir (3).
